# EUROPÄISCHE PATENTANMELDUNG

(11) **EP 2 600 032 A2**
(43) Veröffentlichungstag der Anmeldung: **05.06.2013**
(21) Anmeldenummer: 12194347.6
(22) Anmeldetag: 27.11.2012
(51) Int. Cl.: F16F 15/26

(54) **Ausgleichswelle**

(30) Priorität: 01.12.2011 DE 102011087535
(71) Anmelder: MAHLE International GmbH, 70376 Stuttgart (DE)
(72) Erfinder: Bergmann, Christoph, 04416 Markkleeberg (DE); Repgen, Berthold, 58840 Plettenberg (DE); Walch, Markus, 75015 Bretten (DE)
(74) Vertreter: BRP Renaud & Partner

(57) **Zusammenfassung**

Die Erfindung betrifft eine Ausgleichswelle (1) für einen Verbrennungsmotor mit wenigstens einem Unwuchtabschnitt (2,3) und zumindest einer Lagerstelle (4,5), wobei der wenigstens eine Unwuchtabschnitt (2,3) der wenigstens einen Lagerstelle (4,5) zugeordnet ist. Erfindungswesentlich ist dabei, dass die Ausgleichswelle (1) an der Lagerstelle (4,5) eine Queröffnung (6,6') aufweist, die eine erste Lagerteilfläche (7) von einer zweiten Lagerteilfläche (8) trennt.

Hierdurch kann die Ausgleichswelle (1) fertigungstechnisch einfach und kostengünstig geschmiedet werden.

## Beschreibung

Die vorliegende Erfindung betrifft eine Ausgleichswelle für einen Verbrennungsmotor mit wenigstens einem Unwuchtabschnitt und zumindest einer Lagerstelle gemäß dem Oberbegriff des Anspruchs. Die Erfindung betrifft außerdem einen Verbrennungsmotor mit zumindest einer derartigen Ausgleichswelle.

Aus der WO 2007/121861 A1 ist eine gattungsgemäße Ausgleichswelle für einen Mehrzylindermotor mit wenigstens einem Unwuchtabschnitt und wenigstens einer Lagerstelle bekannt, wobei der wenigstens eine Unwuchtabschnitt einer Lagerstelle zugeordnet ist. Die Lagerstelle an sich besitzt eine radiale Lauffläche, die sich nur partiell über einen Umfang der Lagerstelle erstreckt, wobei eine bei Rotation der Ausgleichswelle resultierende Zentrifugalkraft innerhalb einem Bereich der Lagerstelle liegt, der durch die partiell über den Umfang der Lagerstelle sich erstreckende Lauffläche gebildet ist. Hierdurch soll eine Ausgleichswelle geschaffen werden, bei der eine Reduzierung des Gesamtgewichts und der bewegten Massen unter Beibehaltung des gewünschten Unwuchtausgleichs bei Mehrzylindermotoren gegeben ist.

Aus der WO 2008/151723 A1 ist eine weitere gattungsgemäße Ausgleichswelle bekannt, bei der der partiell ausgebildeten Lauffläche ein Laufringsegment zugeordnet ist, das sich an die partiell ausgebildete Lauffläche der Lagerstelle anschließt und mit dieser eine vollständig geschlossene Lauffläche bildet. Zusätzlich ist zumindest eine, die Breite des Laufringsegments begrenzende Seitenkante vorgesehen, die die partiell ausgebildete Lauffläche überspannt und freitragend ausgebildet ist. Auch hierdurch soll eine Reduzierung des Gesamtgewichts unter Beibehaltung des Unwuchtausgleichs erreicht werden.

Weitere Ausgleichswellen sind beispielsweise aus der US 7,444,976 B2, aus der EP 1 775 484 B1 sowie aus der EP 2 017 486 B1 bekannt.

Nachteilig bei den bekannten Ausgleichswellen ist insbesondere deren aufwändige und damit teure Herstellung.

Die vorliegende Erfindung beschäftigt sich daher mit dem Problem, für eine Ausgleichswelle der gattungsgemäßen Art eine verbesserte oder zumindest eine alternative Ausführungsform anzugeben, die sich insbesondere durch eine rationelle und kostengünstige Herstellung und ein zugleich geringes Gewicht auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, im Bereich einer Lagerstelle einer Ausgleichswelle eine Queröffnung vorzusehen, die einerseits Gewicht einspart und andererseits die im Bereich der Lagerstelle angeordnete Lagerfläche so gestaltet, dass die erfindungsgemäße Ausgleichswelle mittels herkömmlichen Schmiedewerkzeugen einfach zu schmieden und dadurch einfach und kostengünstig herzustellen ist. Die Schmiederichtung für die erfindungsgemäße Ausgleichswelle ist so gewählt, dass die Massenverteilung im Ober- und Untergesenk (nahezu) gleich ist. Dies ist ein wesentlicher Unterschied zum bisherigen Schmieden. Vorteil der erfindungsgemäßen Ausgleichwelle ist deren wirtschaftlichere Fertigung (gleichmäßiger Gesenkverschleiß, verbesserte Fließbedingung etc.). Die Queröffnung trennt dabei eine sich partiell über einen Umfang der Lagerstelle erstreckende erste Lagerteilfläche von einer sich ebenfalls partiell über den Umfang erstreckenden zweiten Lagerteilfläche und teilt die beiden Lagerteilflächen derart auf, dass die gesamte Ausgleichswelle in einem entsprechenden Gesenk und mit einem entsprechenden Schmiedestempel in einem einzigen Schmiedeschritt geschmiedet werden kann. Insbesondere weist die derart ausgestaltete Ausgleichswelle keine in Schmiederichtung verlaufenden Hinterschnittkonturen auf, die ein Schmieden der Welle an sich unmöglich machen. Mit der erfindungsgemäßen Ausgleichswelle werden somit gleichzeitig mehrere signifikante Vorteile erzielt, nämlich zum einen kann die Ausgleichswelle an sich leichter und damit die bewegten Massen reduziert werden, und zum anderen kann die erfindungsgemäße Ausgleichswelle zudem einfach, präzise und zugleich kostengünstig hergestellt werden.

Bei einer vorteilhaften Weiterbildung der erfindungsgemäßen Lösung ist die Ausgleichswelle geschmiedet und die Queröffnung verläuft parallel zur Schmiederichtung. Das Herstellen der erfindungsgemäßen Ausgleichswelle kann somit beispielsweise in einem Gesenkschmiedevorgang erfolgen, bei welchem ein entsprechend ausgeformter Schmiedestempel den zu formenden Schmiedewerkstoff in das zugehörige Gesenk drückt. Die Durchgangsöffnung ermöglicht dabei insbesondere ein Querverdrängen des zu schmiedenden Materials, wodurch insbesondere die Lagerteilflächen leicht zu schmieden sind.

Bei einer vorteilhaften Weiterbildung der erfindungsgemäßen Lösung ist die zweite Lagerteilfläche in Axialrichtung kürzer, das heißt in Querrichtung der Ausgleichswelle gesehen schmäler ausgebildet, als die erste Lagerteilfläche. Die unterschiedlich großen Lagerteilflächen resultieren dabei aus unterschiedlichen Belastungsfällen, da der zweiten Lagerteilfläche ein deutlich geringeres Unwuchtgewicht zugeordnet ist als der ersten Lagerteilfläche. Die Flächenbelastung der einzelnen Lagerteilflächen ist somit aufgrund der unterschiedlichen Größe der beiden Lagerteilflächen und der unterschiedlichen jeweils zugeordneten Unwuchtgewichte vorzugsweise gleich. Die beiden Lagerteilflächen sind somit an die jeweils aufzunehmende Belastung angepasst. Durch die unterschiedlich breiten Lagerteilflächen kann auch eine deutlich verbesserte Schmierung der im Bereich der Lagerteilflächen vorgesehenen Wälzlager, beispielsweise Nadellager, erfolgen, wodurch die Ausgleichswelle an sich besonders leicht und damit energiesparend gelagert werden kann.

Bei einer vorteilhaften Weiterbildung der erfindungsgemäßen Lösung ist die Queröffnung außerhalb der axialen Mitte der Ausgleichswelle angeordnet. Dies ermöglicht es, der ersten Lagerteilfläche ein vergleichsweise großes Unwuchtgewicht zuzuordnen, wogegen der zweiten und kleineren Lagerteilfläche aufgrund der außermittigen Queröffnung ein deutlich geringeres Unwuchtgewicht zugeordnet ist. Die erfindungsgemäße Ausgleichswelle besitzt somit im Bereich der Lagerstellen selbst entsprechende Unwuchtgewichte, durch welche benachbarte Unwuchtabschnitte hinsichtlich ihres Gewichts reduziert werden können.

Bei einer vorteilhaften Weiterbildung der erfindungsgemäßen Lösung ist die zweite Lagerteilfläche von zwei axial zueinander beabstandeten Stegen gehalten, die jeweils einen Rand der Queröffnung bilden. Die Queröffnung kann dabei rechteckig, dreieckig oder trapezförmig ausgebildet sein. Bereits diese - nicht abschließende - Aufzählung zeigt, dass die Ausgestaltung der Queröffnung nahezu frei beliebig wählbar ist und dadurch individuell an jeweils auftretende Belastungen angepasst werden kann. Die Queröffnungen selber weisen üblicherweise einen durchgehenden gleichen Querschnitt auf, um mit einem entsprechend zugehörigen Schmiedestempel ein- und wieder ausfahren zu können.

Zweckmäßig weist die Ausgleichswelle zwischen zwei Lagerstellen einen bauchigen Lünettenangriffsabschnitt auf. Ein derartiger bauchiger Lünettenangriffsabschnitt kann - muss aber nicht - vorgesehen sein und wird üblicherweise nur dann vorgesehen, sofern in diesem Bereich ein Ausweichen der Ausgleichswelle gegenüber einem Pleuel erforderlich ist. Ein derartiger Lünettenangriffsabschnitt ermöglicht darüber hinaus ein Halten der Ausgleichswelle zusätzlich zu den beiden Endbereichen während einer unter Umständen erforderlichen Nachbearbeitung derselben. Durch den bauchigen Lünettenangriffsabschnitt ist zudem eine Verteilung der Unwuchtgewichte möglich. Ein Übergang vom Lünettenangriffsabschnitt zu den Unwuchtabschnitten bzw. den Lagerstellen ist dabei vorzugsweise fließend ineinander übergehend gestaltet.

Weitere wichtige Merkmale und Vorteile der erfindungsgemäßen Vorrichtung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Dabei zeigen, jeweils schematisch,
- Fig. 1 a-c: jeweils ähnliche erfindungsgemäße Ausgleichswellen mit im Bereich der Lagerstellen vorgesehenen trapezförmigen Queröffnungen,
- Fig. 2a, b: weitere mögliche Ausführungsformen der erfindungsgemäßen Ausgleichswellen mit im Bereich der Lagerstellen dreieckförmigen Queröffnungen,
- Fig. 3a, b: ähnliche Wellen wie in Fig. 1a, b und c, jedoch jeweils mit leichten Modifikationen,
- Fig. 4: eine weitere mögliche Ausführungsform der erfindungsgemäßen Ausgleichswelle,
- Fig. 5a, b und c: alternative und nicht unter die Erfindung fallende Ausführungsformen von Ausgleichswellen.

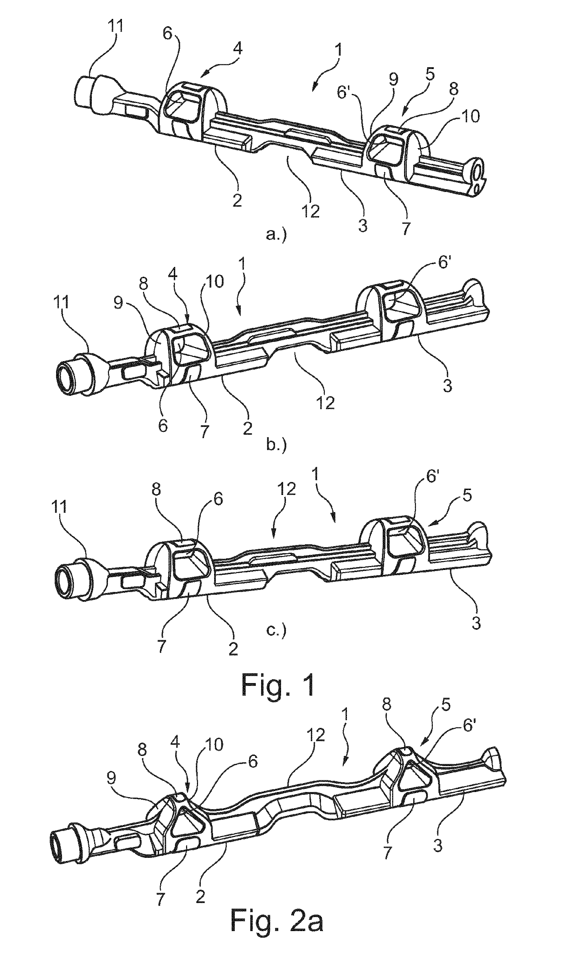

Entsprechend den Figuren 1 bis 4, weist eine erfindungsgemäße Ausgleichswelle 1 für einen nicht gezeigten Verbrennungsmotor mehrere Unwuchtabschnitte 2, 3 sowie jeweils zwei Lagerstellen 4, 5 auf, wobei jeder Lagerstelle 4, 5 zumindest ein Unwuchtabschnitt 2, 3 zugeordnet ist. Erfindungsgemäß besitzt nun die Ausgleichswelle 1 an der Lagerstelle 4, 5 eine Queröffnung 6, 6', die eine erste Lagerteilfläche 7 von einer zweiten Lagerteilfläche 8 trennt. Die erfindungsgemäß vorgesehenen Queröffnungen 6, 6' bieten dabei mehrere signifikante Vorteile: Zum einen reduzieren sie das Gewicht im Bereich der Lagerstelle 4, 5, wodurch die Ausgleichswelle 1 insgesamt leichter ausgebildet und dadurch energiesparender betrieben werden kann. Zum anderen ermöglichen die Queröffnungen 6, 6' ein Schmieden der Ausgleichswelle 1 mittels eines herkömmlichen Gesenks und eines zugehörigen Schmiedestempels, wodurch die Ausgleichswelle 1 nicht nur präzise, sondern auch vergleichsweise kostengünstig hergestellt werden kann. Die Queröffnungen 6, 6' verlaufen dabei üblicherweise parallel zu einer Schmiederichtung.

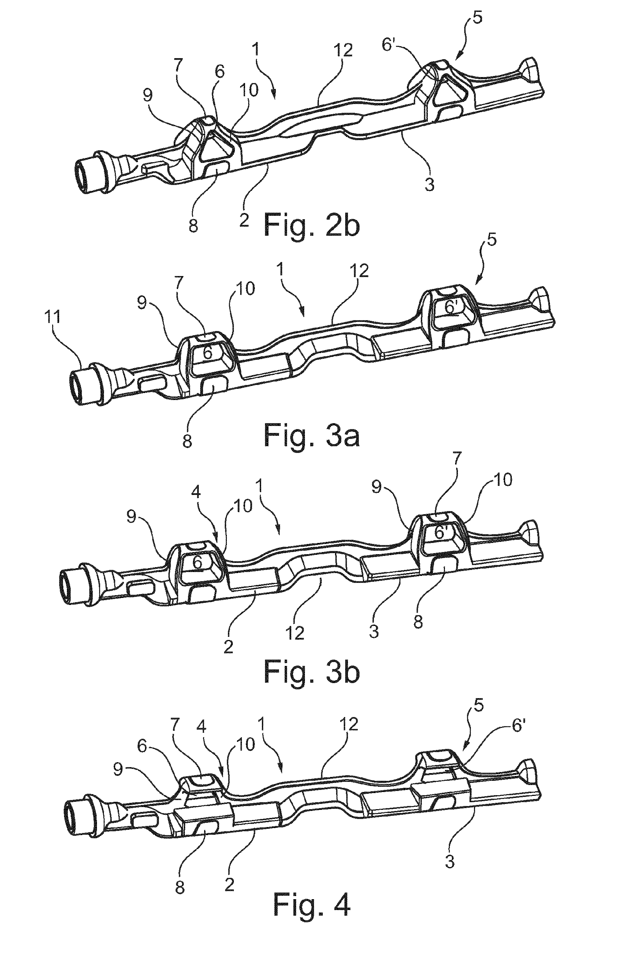

Gemäß den Figuren 1 bis 4 sind dabei der jeweils gezeigten Ausgleichswelle 1 jeweils zwei Queröffnungen 6, 6' zugeordnet, wobei es selbstverständlich auch denkbar ist, dass die erfindungsgemäße Ausgleichswelle 1 lediglich eine Lagerstelle 4, 5 oder aber mehr als zwei Lagerstellen 4, 5 aufweist. Die Queröffnungen 6, 6' sind zudem außermittig, das heißt außerhalb der Längsachse der Ausgleichswelle 1 angeordnet, wodurch die Ausgleichswellen 1 im Bereich der Lagerstellen 4, 5 selbst eine Unwucht besitzen, so dass insbesondere benachbarte Unwuchtabschnitte 2, 3 hinsichtlich ihres Gewichts reduziert werden können. Betrachtet man die erfindungsgemäßen Ausgleichswellen 1 gemäß den Figuren 1 bis 4, so kann man erkennen, dass sich die zweite Lagerteilfläche 8 über einen geringeren Umfangswinkel erstreckt als die erste Lagerteilfläche 7. Optional kann auch die zweite Lagerteilfläche 8 in Axialrichtung der Ausgleichswelle 1 kürzer, das heißt in Querrichtung gesehen schmäler ausgebildet sein, als die erste Lagerteilfläche 7, wie dies beispielsweise bei den Ausgleichswellen gemäß den Figuren 2a, 2b und 3a gezeigt ist. Auch eine umgekehrte Ausführungsform, bei welcher die zweite Lagerteilfläche 8 breiter ist als die erste Lagerteilfläche 7 ist denkbar, wie dies beispielsweise gemäß den Figuren 1a-c gezeigt ist. Üblicherweise ist jedoch die Größe der jeweiligen Lagerteilfläche 7, 8 an die jeweils aufzunehmende Lagerbelastung angepasst, so dass rein flächenmäßig gesehen, die erste Lagerteilfläche 7 größer ausgebildet ist als die zweite Lagerteilfläche 8, da die von der zweiten Lagerteilfläche 8 aufzunehmende Belastung aufgrund des dort geringeren Unwuchtgewichts kleiner ist.

Sämtlichen erfindungsgemäßen Ausgleichswellen 1 ist dabei gemein, dass die Queröffnungen 6, 6' außerhalb der axialen Mitte der Ausgleichswelle 1 angeordnet sind, wodurch das der ersten Lagerteilfläche 7 zugeordnete Unwuchtgewicht deutlich größer ist als das der zweiten Lagerteilfläche 8 zugeordnete Unwuchtgewicht. Sämtliche Ausgleichswellen 1 sind darüber hinaus aus einem Stück, das heißt monolithisch aus einem Werkstoff hergestellt, wodurch die Fertigung rationalisiert werden kann. Die zweite Lagerteilfläche 8 ist dabei von zwei axial zueinander beabstandeten Stegen 9, 10 gehalten, die wiederum jeweils einen Rand der zugehörigen Queröffnung 6, 6' bilden. Die beiden Stege 9, 10 können dabei halbkreisartig ausgebildet sein, wie dies beispielsweise bei den Ausgleichswellen gemäß den Figuren 1 bis 3b dargestellt ist oder aber auch lediglich als reine Radialstege, wie dies beispielsweise bei der Ausgleichswelle 1 gemäß der Fig. 4 gezeigt ist. Hierdurch lässt sich eine weitere Gewichtsreduzierung erreichen. Die Queröffnungen 6, 6' können generell viereckig, insbesondere rechteckig oder trapezförmig ausgebildet sein oder aber dreiecksförmig, wie dies beispielsweise bei den Ausgleichswellen 1 gemäß den Figuren 2a und 2b gezeigt ist. An einem Längsende 11 kann die Ausgleichswelle 1 mit einem Antriebselement, beispielsweise einem nicht gezeigten Zahnrad, drehfest verbunden sein, so dass die Ausgleichswelle 1 über beispielsweise eine Kurbelwelle eines Verbrennungsmotors angetrieben wird. Zwischen den beiden Lagerstellen 4, 5 kann darüber hinaus ein bauchiger Lünettenangriffsabschnitt 12 vorgesehen werden, der ein Ausweichen der Ausgleichswelle 1 vor einem nicht gezeigten Pleuel ermöglicht. Zudem ermöglicht der Lünettenangriffsabschnitt 12 ein Haltern der Ausgleichswelle 1, insbesondere bei einem Nachbearbeiten derselben.

In Bezug auf die erfindungsgemäßen Ausgleichswellen 1 gemäß den Figuren 2a und 2b wird auch hier durch die vergleichsweise schmale zweite Lagerteilfläche 8 eine deutlich verbesserte Schmierung der Lagerstellen 4, 5 erzielt. Als Material für die erfindungsgemäßen Ausgleichswellen 1 kommt beispielsweise Wälzlagerstahl C56E2 in Betracht. Die einzelnen gemäß den Figuren 1 bis 4 gezeigten, jeweils unterschiedlichen erfindungsgemäßen Ausgleichswellen 1 unterscheiden sich beispielsweise im Gesamtgewicht, im Durchmesser, in der Dichte oder im Massenradius.

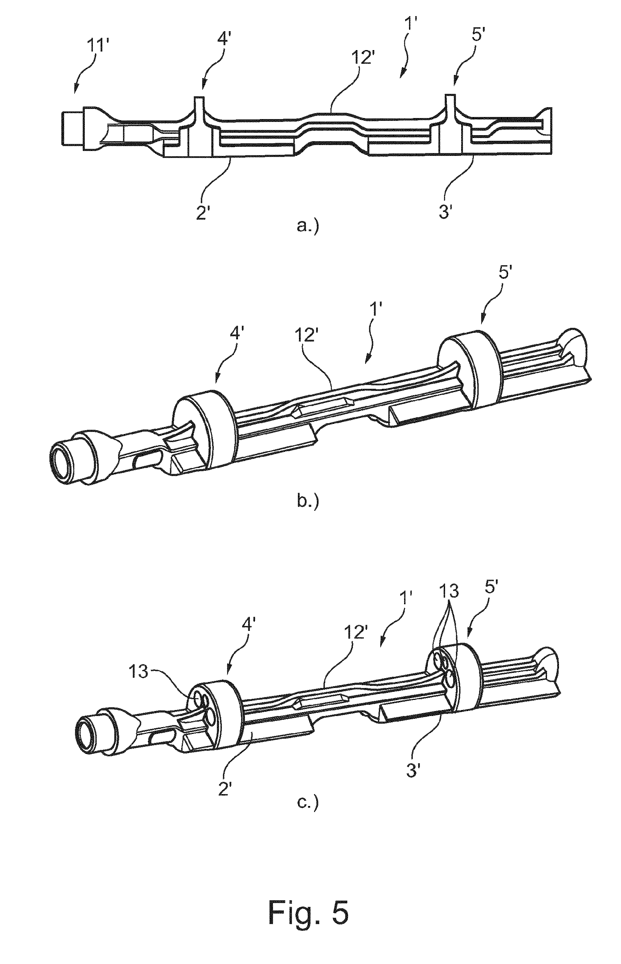

Gemäß den Figuren 5a-c sind weitere Ausführungsformen von Ausgleichswellen 1' gezeigt, die jedoch nicht unter die Erfindung fallen und die im Bereich der Lagerstellen 4', 5' eine durchgehende Lagerfläche besitzen. Die gemäß den Figuren 5a-c dargestellten Ausgleichswellen 1' sind ebenfalls in einem einzigen Schmiedeschritt herstellbar, jedoch ist die Gesenkteilung um 90° gedreht. Die Ausgleichswelle 1' gemäß der Fig. 5c zeigt im Bereich der jeweiligen Lagerstelle 4', 5' Axialbohrungen 13, die das Gewicht in diesem Bereich reduzieren sollen. Eine derartige Gewichtsreduzierung wird selbstverständlich in gleicher Weise auch bei der gemäß der Figur 5a dargestellten Ausgleichswelle 1' gezeigt, wobei sich in Umfangsrichtung verjüngende und dann wieder verbreiternde Lagerfläche eine deutlich verbesserte Schmierung der Lagerstellen 4', 5' ermöglicht.

Mit der erfindungsgemäßen Ausgleichswelle 1 lässt sich diese nicht nur gewichtsreduziert herstellen, was energetische Vorteile beim Betrieb bringt, sondern zugleich aus konstruktiv einfacher und damit kostengünstiger herstellen, insbesondere in einem einzigen Schmiedeschritt. Generell dienen dabei die erfindungsgemäßen Ausgleichswellen 1 in bekannter Weise dazu, die freien Massenkräfte eines Hubkolbenmotors zu reduzieren oder zu beseitigen und dadurch das Betriebsgeräusch und die Vibrationen zu reduzieren. Die durch die Ausgleichswelle 1 erzeugten Massenkräfte wirken denjenigen des Kurbeltriebs entgegen. Je nach Bauart des Verbrennungsmotors werden dabei meist eine oder zwei Ausgleichswellen 1, die mit einfacher oder doppelter Kurbelwellendrehzahl laufen, verwendet.

## Patentansprüche

1. Ausgleichswelle (1) für einen Verbrennungsmotor mit wenigstens einem Unwuchtabschnitt (2,3) und zumindest einer Lagerstelle (4,5), wobei der wenigstens eine Unwuchtabschnitt (2,3) der wenigstens einen Lagerstelle (4,5) zugeordnet ist,
**dadurch gekennzeichnet,**
**dass** die Ausgleichswelle (1) an der Lagerstelle (4,5) eine Queröffnung (6,6') aufweist, die eine erste Lagerteilfläche (7) von einer zweiten Lagerteilfläche (8) trennt.

2. Ausgleichswelle nach Anspruch 1,
**dadurch gekennzeichnet,**
**dass** die Ausgleichswelle (1) geschmiedet ist und die Queröffnung (6,6') parallel zu einer Schmiederichtung verläuft.

3. Ausgleichswelle nach Anspruch 1 oder 2,
**dadurch gekennzeichnet,**
**dass** sich die zweite Lagerteilfläche (8) über einen geringeren Umfangswinkel erstreckt als die erste Lagerteilfläche (7).

4. Ausgleichswelle nach einem der Ansprüche 1 bis 3,
**dadurch gekennzeichnet,**
**dass** die zweite Lagerteilfläche (8) in Axialrichtung der Ausgleichswelle (1) kürzer, das heißt in Querrichtung schmäler ausgebildet ist als die erste Lagerteilfläche (7).

5. Ausgleichswelle nach einem der Ansprüche 1 bis 4,
**dadurch gekennzeichnet,**
**dass** die Queröffnung (6,6') außerhalb der axialen Mitte der Ausgleichswelle (1) angeordnet ist.

6. Ausgleichswelle nach einem der Ansprüche 1 bis 5,
**dadurch gekennzeichnet,**
**dass** die Ausgleichswelle (1) aus einem Stück hergestellt ist.

7. Ausgleichswelle nach einem der Ansprüche 1 bis 6,
**dadurch gekennzeichnet,**
**dass** die zweite Lagerteilfläche (8) von zwei axial zueinander beabstandeten Stegen (9,10) gehalten ist, die jeweils einen Rand der Queröffnung (6,6') bilden.

8. Ausgleichswelle nach Anspruch 7,
**dadurch gekennzeichnet,**
**dass** die beiden Stege (9,10) halbscheibenartig ausgebildet sind.

9. Ausgleichswelle nach einem der Ansprüche 1 bis 8,
**dadurch gekennzeichnet,**
- **dass** die Ausgleichswelle (1) einenends ein Antriebselement, insbesondere ein Zahnrad, trägt, welches mit einem kurbelwellenseitigen Zahnrad koppelbar ist, und/oder
- **dass** die Ausgleichwelle (1) zwischen zwei Lagerstellen (4,5) einen bauchigen Lünettenangriffsabschnitt (12) aufweist, und/oder
- **dass** die Queröffnung (6,6') rechteckig, dreieckig oder trapezförmig ausgebildet ist.

10. Verbrennungsmotor mit zumindest einer Ausgleichswelle (1) nach einem der Ansprüche 1 bis 9.
